# EUROPÄISCHE PATENTSCHRIFT

(11) **EP 2 667 680 B1**
(45) Veröffentlichungstag und Bekanntmachung des Hinweises auf die Patenterteilung: **16.11.2016**
(21) Anmeldenummer: 13002052.2
(22) Anmeldetag: 18.04.2013
(51) Int. Cl.: H04W 84/18, H04L 12/28

(54) **Gebäudeautomationssystem**
Building automation system
Système d'automatisation de bâtiment

(30) Priorität: 25.05.2012 DE 102012010353
(43) Veröffentlichungstag der Anmeldung: 27.11.2013
(73) Patentinhaber: ABB AG, 68309 Mannheim (DE)
(72) Erfinder: Kruppa, Christian, 44651 Herne (DE); Krummel, Holger, 58515 Lüdenscheid (DE); Zierach, Falk, 58513 Lüdenscheid (DE)

(56) Entgegenhaltungen:
- EP-A2- 1 626 532
- WO-A1-2009/088901
- WO-A2-01/35190

## Beschreibung

Die Erfindung betrifft ein Gebäudeautomationssystem eines Gebäudes mit mehreren Elektro-Installationsgeräten in Form von Sensoren und Aktoren.

Ein Gebäudeautomationssystem besteht im allgemeinen Fall aus Elektro-Installationsgeräten, wie insbesondere Sensoren und Aktoren, die über logische Funktionen in vorgegebener Art und Weise miteinander verknüpft sind, siehe EP 1626532. Diese logischen Funktionen werden in der Regel auf ein Bus- oder Funksystem abgebildet. Bei einem derartigen Gebäudeautomationssystem ist die Programmierung oftmals zeitlich mit der Installation verknüpft und wird durch dieselbe Elektrofachkraft ausgeführt. Die durchgeführte Programmierung kann verloren werden, wenn sie nicht ausfallsicher abgespeichert wird. Zudem sind die Elektro-Installationsgeräte relativ komplex, da sie über eine reine Sensor- bzw. Aktor-Funktion hinaus zusätzlich auch eine logische Steuerung beinhalten (beispielsweise bei der Konnex-Terminologie: Applikation, Parameter).

Der Erfindung liegt die Aufgabe zugrunde, ein optimiertes Gebäudeautomationssystem anzugeben.

Diese Aufgabe wird erfindungsgemäß gelöst durch ein Gebäudeautomationssystem eines Gebäudes mit mehreren Elektro-Installationsgeräten in Form von Sensoren und Aktoren, wobei die logischen Funktionen inklusive der Verknüpfungen der Sensoren und Aktoren miteinander / untereinander in Datenspeichern der Sensoren / Aktoren abgelegt sind und wobei Netzwerk-Koppeleinheiten mit Funkeinrichtungen der Sensoren und Aktoren die Voraussetzung für Funkverbindungen der Sensoren / Aktoren untereinander schaffen.

Die mit der Erfindung erzielbaren Vorteile bestehen insbesondere darin, dass zur Durchführung von Programmierungen und Konfigurationen der logischen Steuerung der Sensoren und Aktoren - allgemein Elektro-Installationsgeräte - des Gebäudeautomatisierungssystems nicht zwingend eine Elektrofachkraft erforderlich ist, vielmehr kann die Programmierung auch durch den Endkunden / Hausbesitzer selbst vorgenommen werden. Spätere Nachinstallationen von Elektro-Installationsgeräten sind hinsichtlich der Programmierung relativ einfach und unkompliziert möglich.

In weiterer Ausgestaltung des Gebäudeautomationssystems können die logischen Funktionen inklusive der Verknüpfungen der Sensoren und Aktoren miteinander / untereinander auf einem Heimserver mit zugeordnetem Datenspeicher abgespeichert sein, wobei Netzwerk-Koppeleinheiten der Sensoren und Aktoren die Voraussetzung für erforderliche Netzwerk-Verbindungen mit dem Heimserver schaffen. Vorteilhaft können die logischen Funktionen ausfallsicher auf dem Heimserver abgespeichert werden.

Vorzugsweise ist der Heimserver mit einer Funkeinrichtung ausgerüstet, so dass vorteilhaft zumindest ein mobiles Endgerät zur Konfiguration, Programmierung, Parametrierung und Veränderung der logischen Funktionen sowie zur Bedienung der Sensoren / Aktoren herangezogen werden kann.

Beim vorgeschlagenen Gebäudeautomationssystem ist es besonders vorteilhaft, dass zumindest ein mobiles Endgerät zur Konfiguration, Programmierung, Parametrierung und Veränderung der logischen Funktionen inklusive der Verknüpfungen der Sensoren und Aktoren miteinander / untereinander sowie zur Bedienung der Sensoren / Aktoren vorgesehen sein kann.

In weiterer Ausgestaltung des Gebäudeautomationssystems können Aktoren und jeweils zugeordnete Sensoren jeweils eine physikalische Sensor/Aktor-Baueinheit bilden, so dass eine gewünschte Beeinflussung des Aktors durch den zugeordneten Sensor auch unmittelbar ausführbar ist. Auf diese Weise bleibt das Gebäudeautomationssystems auch bei Ausfall des Netzwerks mit dem Heimserver und/oder bei Ausfall des mobilen Endgerätes und/oder bei Ausfall einzelner Sensoren / Aktoren zumindest im Rahmen der Grundfunktionen funktionsfähig, d. h. die Sensor/Aktor-Baueinheiten sind als Einzelgeräte jeweils funktionsfähig, gestört ist in einem solchen Fall lediglich die Verknüpfung der Sensoren und Aktoren miteinander / untereinander.

Die Erfindung wird nachstehend an Hand der in der Zeichnung dargestellten Ausführungsbeispiele erläutert. Es zeigen:
- Fig. 1: eine erste Ausführungsform eines Gebäudeautomationssystems,
- Fig. 2: eine zweite Ausführungsform eines Gebäudeautomationssystems, zusätzlich umfassend einen Heimserver.

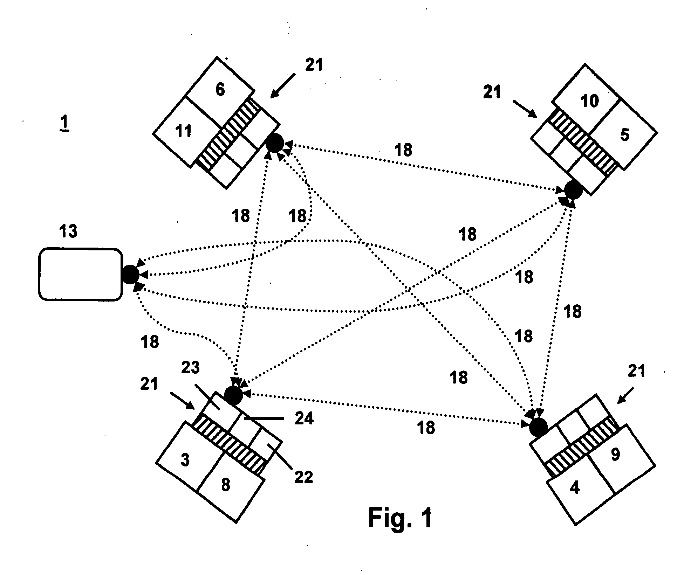

In Fig. 1 ist eine erste Ausführungsform eines Gebäudeautomationssystems dargestellt. Das Gebäudeautomationssystem 1 umfasst
- eine Vielzahl von innerhalb eines Gebäudes 2 befindlicher Sensoren 3, 4, 5, 6 respektive Bedienelemente usw.,
- eine Vielzahl von innerhalb eines Gebäudes 2 befindlicher Aktoren 8, 9, 10, 11 usw.,
- zweckmäßig zumindest ein mobiles Endgerät 13.

Den Sensoren / Aktoren 3/8, 4/9, 5/10, 6/11 sind jeweils Netzwerk-Koppeleinheiten 21 zugeordnet, welche einen Datenspeicher 22, eine Funkeinrichtung 23 und eine Verarbeitungs-/Ansteuereinheit 24 aufweisen. Dabei sind pauschal mit Funkverbindungen 18 gekennzeichnete Funk-Kommunikationen jeweils zwischen den einzelnen Sensoren / Aktoren untereinander sowie zwischen den Sensoren / Aktoren und dem mobilen Endgerät 13 möglich. Die logischen Funktionen inklusive der Verknüpfungen der Sensoren und Aktoren miteinander / untereinander sind jeweils in den Datenspeichern 22 auf den Sensoren / Aktoren abgelegt. Das mobile Endgerät 13 kann diese Informationen dort auslesen, aktualisieren oder zur Verfügung stellen.

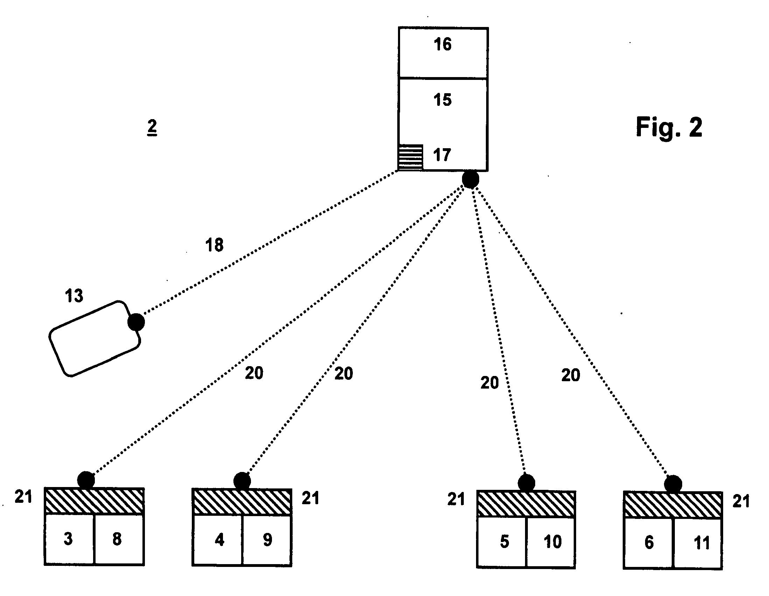

In Fig. 2 ist eine zweite Ausführungsform eines Gebäudeautomationssystems, zusätzlich umfassend einen Heimserver dargestellt. Das Gebäudeautomationssystem 2 umfasst
- eine Vielzahl von innerhalb eines Gebäudes 2 befindlicher Sensoren 3, 4, 5, 6 respektive Bedienelemente usw.,
- eine Vielzahl von innerhalb eines Gebäudes 2 befindlicher Aktoren 8, 9, 10, 11 usw.,
- einen im Gebäude befindlichen Heimserver 15 respektive "Home Server",
- einen im Gebäude befindlichen, dem Heimserver 15 zugeordneten Datenspeicher 16,
- ein mobiles Endgerät 13.

Dabei erfolgt die Kommunikation zwischen dem Heimserver 15 einerseits und den Elektro-Installationsgeräten, d. h. Sensoren 3, 4, 5, 6 und Aktoren 8, 9, 10, 11 andererseits jeweils über Netzwerk-Verbindungen, beilspielsweise Funkverbindungen oder Ethernet-Verbindungen, pauschal mit Ziffer 20 gekennzeichnet, wozu Sensoren 3, 4, 5, 6 und Aktoren 8, 9, 10, 11 jeweils eine Netzwerk-Koppeleinheit mit oder ohne Funkeinrichtung besitzen, pauschal mit Ziffer 21 bezeichnet. Die Kommunikation zwischen dem Heimserver 15 und dem mobilen Endgerät 13 erfolgt über eine Funkverbindung 18, wozu der Heimserver 15 mit einer Funkeinrichtung 17 ausgerüstet ist.

Als Aktoren 8, 9, 10, 11 des Gebäudeautomationssystems 1, 2 können z. B.
- Schaltaktoren zur Ansteuerung von Beleuchtungen oder
- Jalousieaktoren zum Schließen / Öffnen von Jalousien / Rollladen oder
- Dimmaktoren zur Ansteuerung von Beleuchtungen
vorgesehen sein. Dabei wird bei Betätigung eines Dimmaktors z. B. ein weiterer verknüpfter Dimmaktor (automatisch) ebenfalls betätigt, um auf diese Weise eine gewünschte Lichtszene zu realisieren. Die Schaltaktoren / Jalousieaktoren / Dimmaktoren können in beliebiger Weise miteinander verknüpft werden.

Der einem Aktoren 8 bzw. 9 bzw. 10 bzw. 11 jeweils zugeordnete Sensor 3 bzw. 4 bzw. 5 bzw. 6 (Bedienelement) bildet vorzugsweise jeweils eine physikalische Sensor/Aktor-Baueinheit, so dass (notfalls) eine gewünschte Beeinflussung des Aktors durch den zugeordneten Sensor (beispielsweise Einschalten, Ausschalten, Dimmen) auch ohne die Verknüpfung über den Heimserver 15 ausführbar ist. In einem realen Gebäudeautomationssystem 1, 2 ist selbstverständlich eine Vielzahl weiterer Sensoren / Aktoren vorgesehen.

Das mobile Endgerät 13 - ein Smartphone, Smartpad oder Tablet-PC - dient vorteilhaft zur Konfiguration, Programmierung, Parametrierung und Veränderung des Gebäudeautomationssystems 1, 2 und kann zur Bedienung der Sensoren 3, 4, 5, 6 / Aktoren 8, 9, 10, 11 in gewünschter Art und Weise herangezogen werden. Der Heimserver 15 weist vorzugsweise eine automatische Datensicherung auf.

Mit Hilfe logischer Funktionen werden Sensoren 3, 4, 5, 6 und Aktoren 8, 9, 10, 11 miteinander / untereinander verknüpft, zum Beispiel in Form von "Wenn-dann-Entscheidungen". Das vorgeschlagene Gebäudeautomationssystem 1, 2 verlagert die logischen Funktionen des Gebäudeautomationssystems 1, 2 auf die Sensoren / Aktoren oder den Heimserver 12, wodurch sich folgende Vorteile ergeben:
- die Konfiguration, Parametrierung und Veränderung der logischen Funktionen des Gebäudeautomationssystems 1, 2 kann mit einem mobilen Endgerät 13 erfolgen, so dass weder ein spezielles Programmiergerät im Gebäude/Haus verfügbar sein muss, noch dieses Programmiergerät durch eine Elektrofachkraft vor Ort programmiert werden muss,
- es ist eine automatische Aufzeichnung von Ereignissen "Sensor-/Aktor-Events" des Gebäudeautomationssystems 1, 2 auf dem Datenspeicher 16 oder 22 mit der Möglichkeit einer anschließenden Analyse und/oder grafischen Aufbereitung möglich,
- es wird eine automatische Datensicherung erzielt, beispielsweise wenn die logischen Funktionen auf dem backup-fähigen Heimserver 15 mit Datenspeicher 16 gespeichert sind,
- es ist die optionale Einbindung von Internet-basierten Informationen in die logischen Funktionen des Gebäudeautomationssystems 2 über einen Internetzugang des Heimservers 15 möglich,
- es ergibt sich die optionale Nutzungsmöglichkeit von Sensor-Informationen des Gebäudeautomationssystems 2 auch außerhalb des Gebäudes, ebenfalls über den Internetzugang des Heimservers 15,
- es ergibt sich ein einfacher Zugriff auf das Gebäudeautomationssystem 1, 2 des Gebäudes und eine einfache Bedienung seiner Geräte - repräsentiert durch seine Sensoren und Aktoren - über Internet-fähige Geräte, zum Beispiel Smartphones, Smartpads, Tablet-PCs, siehe das mobile Endgerät 13,

Aus der Erfindung resultiert eine Aufteilung der im Zusammenhang mit dem Gebäudeautomationssystem 1, 2 notwendigen Arbeitsleistung in die beiden Teilleistungen
- Installation der Sensoren 3, 4, 5, 6 und Aktoren 8, 9, 10, 11 im Haus und
- Eingabe von logischen Funktionen inklusive der Verknüpfungen zwischen den Sensoren 3, 4, 5, 6 und Aktoren 8, 9, 10, 11.
Beide Teilleistungen müssen nicht mehr zwangsläufig von einer einzigen Elektrofachkraft oder einer einzigen Fachfirma, durchgeführt werden, sondern können unabhängig voneinander ausgeführt werden. Die logischen Verknüpfungen, d. h. Einrichtung der logischen Funktionen inklusive der Verknüpfungen der Sensoren und Aktoren miteinander / untereinander, kann auch durch den Endkunden / Hausbesitzer selbst vorgenommen werden. Beide Teilleistungen können unabhängig voneinander entwickelt und durchgeführt werden, beispielsweise kann eine Nachinstallation von Sensoren und/oder Aktoren erfolgen, die erst zu einem späteren Zeitpunkt logisch verknüpft werden.

Des Weiteren können einmal eingerichtete logische Funktionen einfach auf beliebige Sensor-/Aktor-Kombinationen angewendet werden ("kopieren"). Ebenso ist es möglich, eine beliebige Anzahl Sensoren/Aktoren einer logischen Funktion zuzuordnen. Mehrere Sensoren und/oder Aktoren können zu einer Gruppe zusammengefügt und gemeinsam ferngesteuert werden. Schließlich können logische Funktionen selbst beliebig kaskadiert werden. Die Grundfunktionen der Sensoren 3, 4, 5, 6 und Aktoren 8, 9, 10, 11 und die logischen Funktionen inklusive der Verknüpfungen zwischen diesen Geräten stehen sowohl dem mobilen Endgerät 13 als auch den Sensoren / Aktoren als auch dem Heimserver 15 und damit dem Netzwerk zur Verfügung.

Bei Ausfall des Netzwerks und/oder Abwesenheit des mobilen Endgerätes 13 stehen die Grundfunktionen an jedem Sensor 3, 4, 5, 6 zur Verfügung, die dann über den dort vorhandenen Aktor 8, 9, 10, 11 unmittelbar ausgeführt werden.

### Bezugszeichenliste

- 1: Gebäudeautomationssystem
- 2: Gebäudeautomationssystem
- 3: Sensor (Bedienelement)
- 4: Sensor (Bedienelement)
- 5: Sensor (Bedienelement)
- 6: Sensor (Bedienelement)
- 7: -
- 8: Aktor
- 9: Aktor
- 10: Aktor
- 11: Aktor
- 12: -
- 13: mobiles Endgerät (inklusive Funkeinrichtung) zur Konfiguration, Programmierung, Parametrierung, Bedienung
- 14: -
- 15: Heimserver mit automatischer Datensicherung
- 16: Datenspeicher (zugeordnet zum Heimserver)
- 17: Funkeinrichtung
- 18: Funkverbindung
- 19: -
- 20: Netzwerk-Verbindung
- 21: Netzwerk-Koppeleinheit
- 22: Datenspeicher
- 23: Funkeinrichtung
- 24: Verarbeitungs-/Ansteuereinheit

## Patentansprüche

1. Gebäudeautomationssystem (1, 2) eines Gebäudes mit mehreren Elektro-Instailationsgeräten in Form von Sensoren (3, 4, 5, 6) und in Form von Schaltaktoren, Jalousieaktoren und Dimmaktoren ausgebildeten Aktoren (8, 9, 10, 11), **dadurch gekennzeichnet, dass**
a) logische Funktionen des Gebäudeautomationssystems inklusive der Verknüpfungen der Sensoren (3, 4, 5, 6) und Aktoren (8, 9, 10, 11) miteinander / untereinander in Datenspeichern (22) der Sensoren / Aktoren abgelegt sind,
b) eine automatische Datensicherung erzielt wird, indem die logischen Funktionen inklusive der Verknüpfungen der Sensoren (3, 4, 5, 6) und Aktoren (8, 9, 10, 11) miteinander / untereinander des Weiteren auf einem mit einer Funkeinrichtung (17) ausgerüsteten, backup-fähigen Heimserver (15) mit zugeordnetem Datenspeicher (16) abgespeichert sind,
c) Netzwerk-Koppeleinheiten (21) mit Funkeinrichtungen (23) der Sensoren (3, 4, 5, 6) und Aktoren (8, 9, 10, 11) die Voraussetzung für Funkverbindungen (18) der Sensoren / Aktoren untereinander und die Voraussetzung für erforderliche Netzwerk-Verbindungen (20) mit dem Heimserver (15) schaffen,
d) zumindest ein mobiles Endgerät (13) zur Konfiguration, Programmierung, Parametrierung und Veränderung der logischen Funktionen des Gebäudeautomationssystems sowie zur Bedienung .der Sensoren (3, 4, 5, 6) / Aktoren (8, 9, 10, 11) vorgesehen ist,
e) Aktoren (8, 9, 10, 11) und jeweils zugeordnete Sensoren (3,4, 5, 6) jeweils eine physikalische Sensor/Aktor-Baueinheit bilden, so dass eine gewünschte Beeinflussung des Aktors durch den zugeordneten Sensor auch unmittelbar ausführbar ist und
f) mehrere Sensoren und/oder Aktoren zu einer Gruppe zusammengefügt und gemeinsam femgesteuert werden, indem bei Betätigung eines Dimmaktors ein weiterer verknüpfter Dimmaktor automatisch ebenfalls betätigt wird, um auf diese Weise eine gewünschte Lichtszene zu realisieren.

2. Gebäudeautomationssystem (1, 2) nach Anspruch 1, **gekennzeichnet durch** eine Einbindung von Intemet-basierten Informationen in die logischen Funktionen des Gebäudeautomationssystems (2) über einen Internetzugang des Heimservers (15).

## Claims

1. Building automation system (1, 2) of a building comprising a plurality of electrical installation devices in the form of sensors (3, 4, 5, 6) and actuators (8, 9, 10, 11) embodied in the form of switching actuators, blind actuators and dimming actuators, **characterized in that**
a) logical functions of the building automation system including the linkages of the sensors (3, 4, 5, 6) and actuators (8, 9, 10, 11) with/among one another are stored in data memories (22) of the sensors/actuators,
b) an automatic data protection is achieved by virtue of the logical functions including the linkages of the sensors (3, 4, 5, 6) and actuators (8, 9, 10, 11) with/among one another furthermore being stored on a backup-enabled home server (15) with assigned data memory (16), said home server being equipped with a radio device (17),
c) network coupling units (21) with radio devices (23) of the sensors (3, 4, 5, 6) and actuators (8, 9, 10, 11) provide the precondition for radio connections (18) of the sensors/actuators among one another and the precondition for required network connections (20) to the home server (15),
d) at least one mobile terminal (13) for the configuration, programming, parameterization and variation of the logical functions of the building automation system and for the operation of the sensors (3, 4, 5, 6)/actuators (8, 9, 10, 11) is provided,
e) actuators (8, 9, 10, 11) and respectively assigned sensors (3, 4, 5, 6) respectively form a physical sensor/actuator structural unit, such that a desired influencing of the actuator by the assigned sensor is able to be performed also directly, and
f) a plurality of sensors and/or actuators are combined to form a group and are remote-controlled jointly by virtue of the fact that upon actuation of a dimming actuator, a further linked dimming actuator is automatically likewise actuated in order to realize a desired light scene in this way.

2. Building automation system (1, 2) according to Claim 1, **characterized by** an incorporation of Internet-based information into the logical functions of the building automation system (2) via an Internet access of the home server (15).

## Revendications

1. Système d'automatisation de bâtiment (1, 2) d'un bâtiment comportant de multiples appareils d'installation électrique sous la forme de capteurs (3, 4, 5, 6) et d'actionneurs (8, 9, 10, 11) réalisés sous la forme d'actionneurs de commutation, d'actionneurs de stores et d'actionneurs de variateurs, **caractérisé en ce que**
a) des fonctions logiques du système d'automatisation de bâtiment, y compris les combinaisons les uns avec les autres/les uns entre les autres des capteurs (3, 4, 5, 6) et des actionneurs (8, 9, 10, 11) sont stockées dans des mémoires de données (22) des capteurs/actionneurs,
b) une sauvegarde automatique de données est réalisée en stockant en outre des fonctions logiques, y compris les combinaisons les uns avec les autres/les uns entre les autres des capteurs (3, 4, 5, 6) et des actionneurs (8, 9, 10, 11) sur un serveur domestique (15) ayant une mémoire de données (16) associée, équipé d'un dispositif radio (17) et ayant une capacité de sauvegarde,
c) des unités de connexion en réseau (21) comportant des dispositifs radio (23) des capteurs (3, 4, 5, 6) et des actionneurs (8, 9, 10, 11) créent une condition préalable aux liaisons radio (18) des capteurs/actionneurs les uns entre les autres et la condition préalable aux connexions en réseau (20) nécessaires au serveur domestique (15),
d) au moins un terminal mobile (13) est prévu pour configurer, programmer, paramétrer et modifier les fonctions logiques du système d'automatisation de bâtiment et pour commander les capteurs (3, 4, 5, 6)/actionneurs (8, 9, 10, 11),
e) des actionneurs (8, 9, 10, 11) et des capteurs (3, 4, 5, 6) respectifs associés forment un ensemble physique capteur/actionneur, de manière à ce qu'une influence souhaitée puisse également être directement produite sur l'actionneur par le capteur associé, et
f) de multiples capteurs et/ou actionneurs sont réunis en un groupe et sont télécommandés en commun, en actionnant également automatiquement, lors de l'actionnement d'un actionneur de variateur, un autre actionneur de variateur combiné, afin d'obtenir de cette manière une scène lumineuse souhaitée.

2. Système d'automatisation de bâtiment (1, 2) selon la revendication 1, **caractérisé par** une intégration d'informations basées sur l'Internet dans les fonctions logiques du système d'automatisation de bâtiment (2) par l'intermédiaire d'un accès Internet du serveur domestique (15).
